# EUROPEAN PATENT SPECIFICATION

(11) **EP 2 317 234 B1**
(45) Date of publication and mention of the grant of the patent: **19.09.2012**
(21) Application number: 10007754.4
(22) Date of filing: 26.07.2010
(51) Int. Cl.: F24D 19/10

(54) **Flow path switch control device**
Vorrichtung zur Steuerung des Wechsels eines Fließpfads
Dispositif de contrôle de commutation de trajectoire de flux

(30) Priority: 01.11.2009 CN 200910208966
(43) Date of publication of application: 04.05.2011
(73) Proprietor: Zhejiang Sanhua Climate & Appliance Controls Group, Chengguan Town Xinchang County Zhejiang Province 312500 (CN)
(72) Inventor: Chen, Bin, Zhejiang Province 312500 (CN)
(74) Representative: Thoma, Michael

(56) References cited:
- WO-A2-2006/052657
- CN-Y- 2 753 926

## Description

The present invention relates to a fluid control field, in particular, to a switch device in a control system such as HVAC (heating, ventilating and air conditioning), refrigeration system, etc., and specifically to a flow path switch control device suitable for large capacity and high pressure environment.

### BACKGROUND OF THE INVENTION

A solenoid switch is often used in a temperature controlling and regulating system such as HVAC, refrigeration system, etc.. The main principle of the solenoid switch lies in that the up or down movement of an iron core is controlled through an electromagnetic force generated by a energized coil, so as to open or close a solenoid valve in an air conditioning system, thereby controlling on/off of the medium in a pipeline system. As individual housing area becomes larger and buildings such as shopping malls are increased, demand for large capacity air conditioning unit is increased. In such large capacity air conditioning unit, it is required that the solenoid switch should also be of large capacity and large diameter. A conventional direct-operated solenoid valve can not meet the requirement of such working conditions due to limited diameter of the valve. Mostly, a pilot-operated solenoid switch is used to replace the direct-operated solenoid valve. However, since the pressure at an upper portion of a piston will drop instantaneously to the pressure at an outlet at the moment when a pilot valve is opened, a large pressure difference is formed between the upper and lower sides of a piston to drive the piston to move, which results in a strong impact between a piston stopping member and the piston. The impact will be stronger in the valve having larger pressure difference and larger valve diameter. Therefore, there is a problem that the start up of the large capacity pilot solenoid valve in the prior art is not stable.

Accordingly, a large diameter pilot solenoid switch is disclosed in the applicant's Chinese patent No. CN2753926Y published on January 25, 2006. Referring to Fig. 4, the solenoid switch includes a coil 1 and a main valve 7 that are connected to the upper and lower portions of a sleeve 3 respectively. A plug 2 is arranged within the sleeve 3. Two valve ports, i.e. a pilot valve port 8 and a main valve port 14 being in communication with the pilot valve port 8, are provided in the main valve 7. A pilot valve chamber 16 enclosed by the sleeve 3, the plug 2, a spring 5 and a iron core 4 is formed above the pilot valve port 8. A steel ball 6 is disposed on the iron core 4. A main valve chamber 13 is formed near the main valve port 14. A piston 10 is provided in the main valve chamber 13. The piston 10 is fitted with an end cover 11 fixed at an end of the main valve. A return spring 12 is provided between the piston 10 and the end cover 11. Axes of the piston 10 and the iron core 4 are perpendicular to each other. A sealing plug 9 made of polymer material is provided on the piston 10. The surface of the sealing plug at the side of the main valve port is a flat surface. The main valve chamber 13 and the pilot valve chamber 16 are communicated with each other via a through hole 15. There is no boss inside the piston 10. A boss is provided on the end cover 11.

In the above solenoid valve configuration, a boss is provided either on the end cover 11 or inside the piston 10 in order to avoid a direct impact between the end surface of the piston 10 and the end cover 11. However, since the pressure difference between the opposite sides of the piston 10 is changed instantaneously at the time of starting up of the valve, such configuration can not thoroughly solve the impact problem, which will affect the life span of the valve and the operating stability of the system.
Furthermore, document WO 2006/052657 A2 discloses an electrically controlled pressure relief valve having a valve cylinder defining a valve orifice cooperating with a movable valve piston which is spring biased towards a closing position, said valve orifice being shaped such that an orifice area changes evenly at a given operating point. More particularly, a soft position controller receives a positioning signal based on a target valve position and an actual valve position, and generates a valve control signal indicative of a force to much the valve from the actual position to the target valve position.

### SUMMARY OF THE INVENTION

The technical problem to be solved by the present invention is to control and reduce the pressure change in fluid passing through a valve device by improving the configuration of a conventional large diameter solenoid switch in a refrigeration system. Specifically, during opening of the valve, the fluid flow area in a pressure balancing control circuit is slowly increased such that the pressure difference between the opposite sides of a valve body is increased gradually. Therefore, the opening of the valve is smooth without strong impact and vibration, and thus the problem of strong vibration and noise occurred at the moment when the solenoid switch is operated under large pressure difference is avoided. For this purpose, the present invention provides a flow path switch control device.

The flow path switch control device includes a fluid inlet, a fluid outlet, a valve device arranged between the fluid inlet and the fluid outlet, and a pressure balancing control circuit, in accordance with claim 1.

Specifically, the adjusting device reduces the pressure change in the fluid in the circuit by changing the flow area of the fluid.

Specifically, the adjusting device of the flow path switch control device is driven by a pulse signal.

Further, a pressure balancing hole is further provided in the pressure balancing control circuit. There may be two or more pressure balancing holes. Further, the flow path switch control device also includes a casing which receives the valve device and the adjusting device. A connecting passage communicating the valve device with the adjusting device is provided in the casing.

Further, the valve device and the adjusting device are communicated via a connecting pipe.

The flow path switch control device of the present invention is provided with an adjusting device in the pressure balancing control circuit. The adjusting device is actuated and driven by an external pulse signal to change the flow area of the fluid in the pressure balancing control circuit , and to gradually release the fluid pressure in the pressure balancing control circuit. The flow path switch control device closes the flow path in a full-closed area. The flow path switch control device allows the flowrate to increase slowly and thus open the main valve, or to decrease slowly and thus close the main valve in a flowrate changing area. The flow path switch control device maintain stable open of the mail valve in a full-opened area. In this way, it is smooth during opening and closing of the valve, and thus the problem of strong vibration and noise occurred at the moment when the solenoid switch is operated under large pressure difference is avoided.

### BRIEF DESCRIPTION OF THE DRAWINGS

Figure 1 is a detailed structural view of a preferred flow path switch control device according to the present invention;

Figure 2 is a detailed structural view of another preferred flow path switch control device according to the present invention;

Figure 3 is a schematic diagram of valve opening characteristics in a flow path using the above flow path switch control device; and

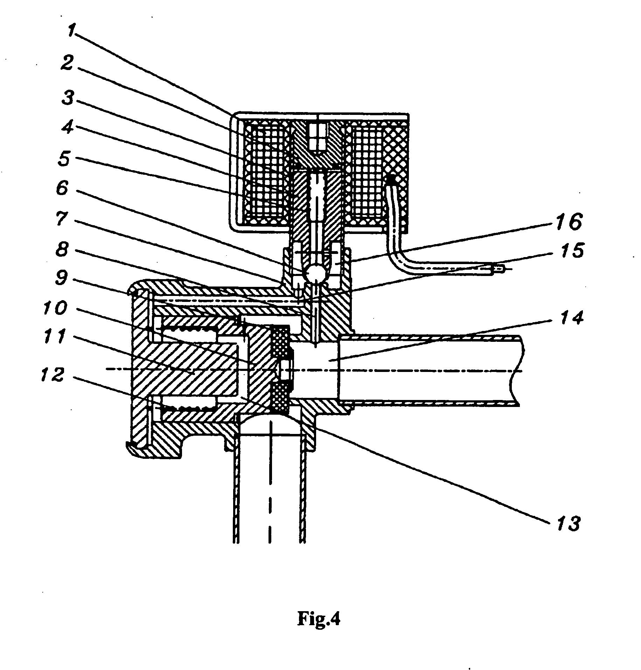

Figure 4 is a structural view of a typical flow path switch control device in the prior art.

Reference Numerals:

| | | |
|---|---|---|
| 1- coil | 2- plug | 3- sleeve |
| 4- iron core | 5- spring | 6- steel ball |
| 7- main valve | 8- pilot valve port | 9- sealing plug |
| 10- piston | 11- end cover | 12- return spring |
| 13- main valve chamber | 14- main valve port | |
| 15- through hole | 16- pilot valve chamber | |
| 100/100'- flow path switch control device | | |
| 101- fluid inlet | 111- inlet chamber | 112- inlet connecting pipe |
| 102- fluid outlet | 121- outlet chamber | 122- outlet connecting pipe |
| 103- valve device | 131- valve body | 132- support member |
| 133- spring | 134- pressure balancing hole | 135- seal member |
| 136- valve device housing | | 137- balancing chamber |
| 104- pressure balancing control circuit | | 141- connecting passage |
| 105- adjusting device | | |
| 151- adjusting rod | 152- magnetic rotor | 153- coil |
| 154- nut | 155- screw rod | 156- adjusting device housing; |
| 106- casing | 161- first receiving chamber | 162- second receiving chamber |
| 163- first valve port | 164- second valve port | |
| 107- signal lead wire | 108/109- connecting pipe | |

### DETAILED DESCRIPTION OF THE INVENTION

In order that those skilled in the art can better understand the technical solutions of the present invention, the opening process of the flow path switch control device will be explained in detail below with reference to the drawings and embodiments.

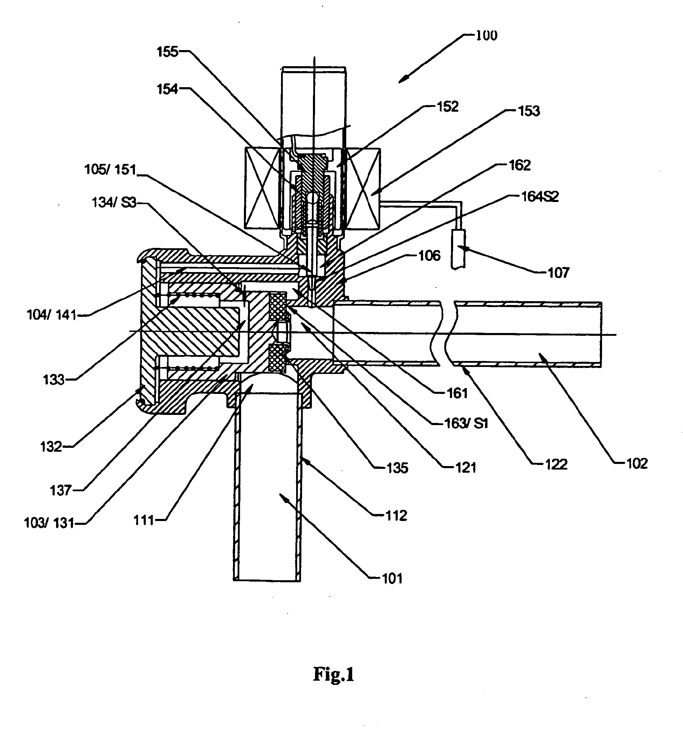

Fig. 1 is a structural view of a specific flow path switch control device according to the present invention.

As shown in Fig. 1, the flow path switch control device 100 includes a casing 106 integrally formed of metal material. A valve device 103 and an adjusting device 105 are hermetically mounted on the casing 106. An inlet chamber 111 and an outlet chamber 121 are formed in the casing 106. An inlet connecting pipe 112 is communicated with the inlet chamber 111 by seal welding, and an outlet connecting pipe 122 is communicated with the outlet chamber 121 by seal welding. In this way, a main valve circuit consisted of a fluid inlet 101, the inlet chamber 111, the valve device 103, the outlet chamber 121 and a fluid outlet 102 in sequence is formed. A pressure balancing control circuit 104 is provided in the flow path switch control device 100. The adjusting device 105 is disposed in the control circuit to regulate and reduce the pressure change when the fluid passes through the pressure balancing control circuit 104 by changing the flow area of the fluid path.

The valve device 103 is wholly disposed in a first receiving chamber 161 of the casing 106. The valve device 103 mainly comprises a valve body 131 and a support member 132. The valve body 131 is slidable within the first receiving chamber 161 and partitions a closed balancing chamber 137 from the first receiving chamber 161. The support member 132 is welded on the casing 16 and seals the first receiving chamber 161. The first receiving chamber 161 is communicated with the inlet chamber 111 via a pressure balancing hole 134 machined in the valve body 131. The balancing hole 134 has a diameter ranged from 0.3 to 1.5mm, and preferably from 0.5 to 1mm. The inner cross sectional area of the balancing hole 134 may be set as the flow area S3 of the balancing hole 134. In this embodiment, only one balancing hole 134 is machined in the valve body 131. Certainly, two balancing holes may also be symmetrically machined in the valve body. A seal member 135 made of non-metal material is mounted at the leading end of the valve body 131. A spring 133 is disposed between the valve body 131 and the support member 132 to urge the seal member 135 of the valve body 131 against a first valve port 163 of the casing 106. The flow area of the fluid flowed between the seal member 135 of the valve body 131 and the first valve port 163 of the casing 106 may be set as S1. The flow path between the inlet chamber 111 and the outlet chamber 121 is shut off when the seal member 135 seals against the first valve port 163.

The adjusting device 105 is mounted in a second receiving chamber 162 of the casing 106 by seal welding. The adjusting device 105 mainly comprises an adjusting rod 151, a magnetic rotor 152, a coil 153 and a signal lead wire 107. The adjusting rod 151 is coupled to the magnetic rotor 152 by a transmission pair of a nut 154 and a screw rod 155. The adjusting rod 151 is extended deeply into the second receiving chamber 162. Thus, a pressure balancing control circuit 104 consisted of the first receiving chamber 161, the pressure balancing hole 134, the balancing chamber 137, a connecting passage 141 and the second receiving chamber 162 is formed between the valve device 103 and the adjusting device 105. The flow area of the fluid flowed between the adjusting rod 151 and a second valve port 164 may be set as the flow area S2 of the pressure balancing control circuit 104.

When a certain amount of pulse signal is inputted from the signal lead wire 107, the magnetic rotor 152 is rotated by a certain angle under the action of the coil 153. Then, being driven by the transmission pair of the nut 154 and the screw rod 155, the adjusting rod 151 is moved upwardly or downwardly by a certain displacement within the second receiving chamber 162, so as to change the flow area S2 of the pressure balancing control circuit 104 and thus control the pressure change in the fluid.

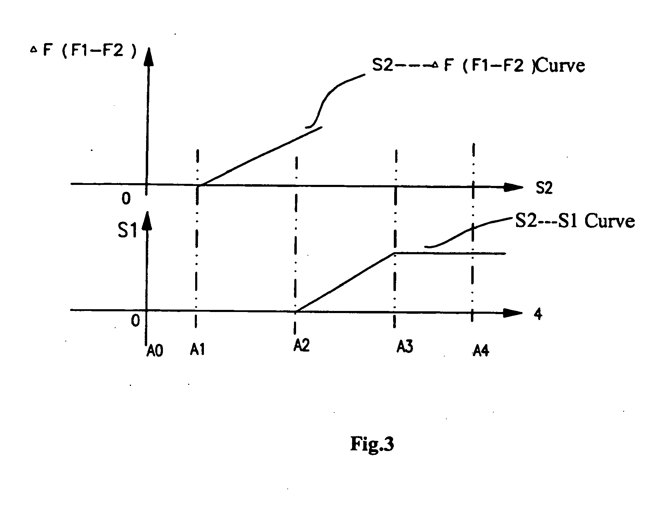

Valve opening characteristics in the flow path of the above flow path switch control device is shown in Fig. 3. It is supposed that the pressure at the inlet chamber 111 is F1, the pressure at the balancing chamber 137 is F2, the pressure of the spring 133 abutting against the valve body 131 is F3, and △F=F1-F2.

When the flow path switch control device 100 is in a closed state (position A0), the pressure balancing control circuit 104 is closed, the inlet chamber 111 and the balancing chamber 137 are in a pressure balanced state. That is, △F=F1-F2=0, and the valve body 131 abuts against the first valve port 163 under the force F3 of the spring 133.

When the flow path switch control device is started up from the closed state, by inputting a certain amount of pulse signal, the adjusting rod 151 is moved slowly away from the second valve port 164 of the casing 106 and thus the fluid flow area S2 of the pressure balancing control circuit 104 is slowly increased. When this process proceeds to position A1, S2 is equal to the flow area S3 of the pressure balancing hole 134. After S2 > S3, the pressure F2 in the pressure balancing control circuit 104 starts to decrease (that is, F1 > F2), and thus a pressure difference occurs between the inlet chamber 111 and the balancing chamber 137. When this process proceeds to position A2, F1=F2+F3. After F1 > F2+F3, the valve body 131 starts to move away from the first valve port 163 and thus the valve device 131 is opened until it is fully opened in a stable state (i.e., state A3). Thereafter, the flowrate of the valve device becomes stable (i.e., state A4). The above-mentioned valve opening process is smoothly progressed. Therefore, the valve body 131 is prevented from being drastically moved and from impacting with the support member 132.

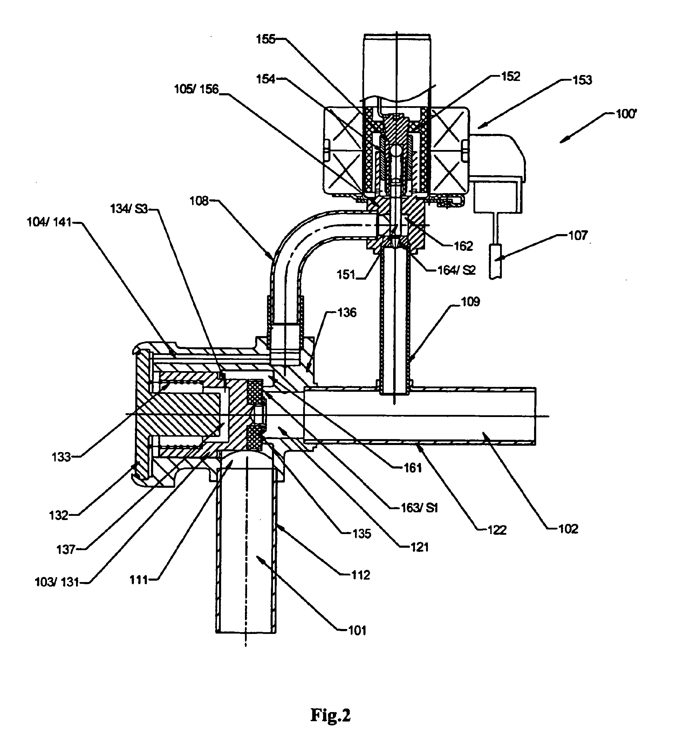

Figure 2 is a structural view of another specific flow path switch control device according to the present invention. As shown in Fig. 2, differing from the first embodiment, this flow path switch control device 100' includes a valve device housing 136 integrally formed of metal material. The inlet chamber 111 and the outlet chamber 121 are formed in the valve device housing 136. The inlet connecting pipe 112 is communicated with the inlet chamber 111 by seal welding, and the outlet connecting pipe 122 is communicated with the outlet chamber 121 by seal welding. In this way, a main valve circuit consisted of a fluid inlet 101, the inlet chamber 111, the valve device 103, the outlet chamber 121 and a fluid outlet 102 in sequence is formed. A pressure balancing control circuit 104 is provided in the flow path switch control device 100'. An adjusting device 105 is disposed in the control circuit to regulate and reduce the pressure change through the pressure balancing control circuit 104.

A valve device 103 is wholly disposed in a first receiving chamber 161 of the valve device housing 136. The valve device 103 mainly comprises a valve body 131 and a support member 132. The valve body 131 is slidable within the first receiving chamber 161 and partitions a closed balancing chamber 137 from the first receiving chamber 161. The support member 132 is welded on the valve device housing 136 and seals the first receiving chamber 161. The first receiving chamber 161 is communicated with the inlet chamber 111 via the pressure balancing hole 134 machined in the valve body 131. The seal member 135 is mounted at the leading end of the valve body 131. The spring 133 is disposed between the valve body 131 and the support member 132 to urge the seal member 135 of the valve body 131 against the first valve port 163 of the valve device housing 136, so as to shut off the flow path between the inlet chamber 111 and the outlet chamber 121.

The adjusting device 105 is connected to the valve device housing 136 and an outlet pipe 122 via connecting pipes 108 and 109, respectively. The adjusting device 105 mainly comprises the adjusting rod 151, the magnetic rotor 152, the coil 153 and the signal lead wire 107. The adjusting rod 151 is coupled to the magnetic rotor 152 by a transmission pair of a nut 154 and a screw rod 155. The adjusting rod 151 is extended deeply into the second receiving chamber 162. When a certain amount of pulse signal is inputted from the signal lead wire 107, the magnetic rotor 152 is rotated by a certain angle under the action of the coil 153. Then, being driven by the transmission pair of the nut 154 and the screw rod 155, the adjusting rod 151 is moved upwardly or downwardly by a certain displacement within the second receiving chamber 162, such that the adjusting rod 151 cooperates with the second valve port 164 to control the pressure change in fluid by changing the flow area in the pressure balancing control circuit 104 as desired.

Valve opening characteristics in the flow path of the above flow path switch control device is substantially the same as that of the first embodiment and will not be repeatedly described herein.

The above description is only for better explaining the technical solutions of the present invention, in which particular embodiments, functions and resulting effects during opening process of the flow path switch control device is explained in detail. Similarly, with these configurations, the same functions and effects will also be achieved during closing process of the flow path switch control device. It is noted that some variation and modifications can be made by those skilled in the art without departing from the principle of the invention as defined in the attached claims.

## Claims

1. A flow path switch control device comprising a fluid inlet (101), a fluid outlet (102), a valve device (103) arranged between the fluid inlet (101) and the fluid outlet (102), a pressure balancing control circuit (104), and a casing (106), wherein the valve device (103) comprises a valve body (131) and a support member (132) and is wholly disposed in a first receiving chamber (161) of the casing (106), the valve body (131) is slidable within the first receiving chamber (161) and partitions a closed balancing chamber (137) from the first receiving chamber (161),
**characterized in that** an adjusting device (105) is provided in a second receiving chamber (162) of the casing (106), the pressure balancing control circuit (104) is formed between the first receiving chamber (161) and the second receiving chamber (162), and the adjusting device (105) is provided to reduce a pressure change in fluid passing through the pressure balancing control circuit (104) when the flow path switch control device is opened/closed.

2. The flow path switch control device according to claim 1, wherein the adjusting device (105) reduces the pressure change in the fluid in the pressure balancing control circuit (104) by changing a fluid flow area in the flow path.

3. The flow path switch control device according to claim 2, wherein the adjusting device (105) is driven by a pulse signal.

4. The flow path switch control device according to claim 2, wherein a pressure balancing hole (134) is provided in the pressure balancing control circuit (104).

5. The flow path switch control device according to claim 4, wherein the pressure balancing hole (134) is provided in the valve body (131) and communicates the first receiving chamber (161) with an inlet chamber (111).

6. The flow path switch control device according to claim 4, wherein there are two or more pressure balancing holes (134).

7. The flow path switch control device according to claim 4, wherein the pressure balancing hole (134) has a diameter ranged from 0.3 to 1.5 mm.

8. The flow path switch control device according to claim 7, wherein the pressure balancing hole (134) has a diameter ranged from 0.5 to 1.0 mm.

9. The flow path switch control device according to claim 4, wherein a connecting passage (141) communicating a balancing chamber (137) with the second receiving chamber (162) is provided in the casing (106).

10. The flow path switch control device according to any one of claims 1-8, wherein the connecting passage (141) and the second receiving chamber (162) are communicated via a connecting pipe (108).

11. The flow path switch control device according to any one of claims 1-10, wherein an inlet chamber (111) and an outlet chamber (121) are formed in the casing (106).

12. The flow path switch control device according to claim 9, wherein the pressure balancing control circuit (104) is consisted of the first receiving chamber (161), the pressure balancing hole (134), the balancing chamber (137), the connecting passage (141) and the second receiving chamber (162).

13. The flow path switch control device according to any one of claims 1-12, wherein the adjusting device (105) comprises an adjusting rod (151), a magnetic rotor (152), a coil (153) and a signal lead wire (107), the adjusting rod (151) is extended into the second receiving chamber (162), and the adjusting rod (151) is moved upwardly or downwardly by a certain displacement within the second receiving chamber (162) so as to change a flow area (S2) of the pressure balancing control circuit (104).

## Patentansprüche

1. Vorrichtung zum Steuern des Wechsels eines Strömungswegs, welche einen Fluideinlass (101), einen Fluidauslass (102), eine zwischen dem Fluideinlass (101) und dem Fluidauslass (102) angeordnete Ventilvorrichtung (103), einen Druckausgleichssteuerkreis (104) und ein Gehäuse (106) umfasst, wobei die Ventilvorrichtung (103) einen Ventilkörper (131) und ein Stützelement (132) umfasst und ganz in einer ersten Aufnahmekammer (161) des Gehäuses (106) angeordnet ist, der Ventilkörper (131) in der ersten Aufnahmekammer (161) verschiebbar ist und eine geschlossene Ausgleichskammer (137) von der ersten Aufnahmekammer (161) abtrennt,
**dadurch gekennzeichnet, dass** eine Anpassvorrichtung (105) in einer zweiten Aufnahmekammer (162) des Gehäuses (106) vorgesehen ist, der Druckausgleichsteuerkreis (104) zwischen der ersten Aufnahmekammer (161) und der zweiten Aufnahmekammer (162) ausgebildet ist und die Anpassvorrichtung (105) vorgesehen ist, um eine Druckänderung des durch den Druckausgleichsteuerkreis (104) tretenden Fluids zu verringern, wenn die Vorrichtung zum Steuern des Wechsels des Strömungswegs geöffnet/geschlossen wird.

2. Vorrichtung zum Steuern des Wechsels eines Strömungswegs nach Anspruch 1, wobei die Anpassvorrichtung (105) die Druckänderung des Fluids in dem Druckausgleichsteuerkreis (104) durch Ändern einer Fluidströmungsfläche in dem Strömungsweg verringert.

3. Vorrichtung zum Steuern des Wechsels eines Strömungswegs nach Anspruch 2, wobei die Anpassvorrichtung (105) durch ein Pulssignal angesteuert wird.

4. Vorrichtung zum Steuern des Wechsels eines Strömungswegs nach Anspruch 2, wobei ein Druckausgleichsloch (134) in dem Druckausgleichssteuerkreis (104) vorgesehen ist.

5. Vorrichtung zum Steuern des Wechsels eines Strömungswegs nach Anspruch 4, wobei das Druckausgleichsloch (134) in dem Ventilkörper (131) vorgesehen ist und die erste Aufnahmekammer (161) mit einer Einlasskammer (111) in Verbindung setzt.

6. Vorrichtung zum Steuern des Wechsels eines Strömungswegs nach Anspruch 4, wobei es zwei oder mehr Druckausgleichslöcher (134) gibt.

7. Vorrichtung zum Steuern des Wechsels eines Strömungswegs nach Anspruch 4, wobei das Druckausgleichsloch (134) einen Durchmesser in dem Bereich von 0,3 bis 1,5 mm aufweist.

8. Vorrichtung zum Steuern des Wechsels eines Strömungswegs nach Anspruch 7, wobei das Druckausgleichsloch (134) einen Durchmesser in dem Bereich von 0,5 bis 1,0 mm aufweist.

9. Vorrichtung zum Steuern des Wechsels eines Strömungswegs nach Anspruch 4, wobei ein Verbindungskanal (141), der eine Ausgleichskammer (137) mit der zweiten Aufnahmekammer (162) in Verbindung setzt, in dem Gehäuse (106) vorgesehen ist.

10. Vorrichtung zum Steuern des Wechsels eines Strömungswegs nach einem der Ansprüche 1 - 8, wobei der Verbindungskanal (141) und die zweite Aufnahmekammer (162) mittels eines Verbindungsrohrs (108) in Verbindung stehen.

11. Vorrichtung zum Steuern des Wechsels eines Strömungswegs nach einem der Ansprüche 1 - 10, wobei eine Einlasskammer (111) und eine Auslasskammer (121) in dem Gehäuse (106) ausgebildet sind.

12. Vorrichtung zum Steuern des Wechsels eines Strömungswegs nach Anspruch 9, wobei der Druckausgleichskreis (104) aus der ersten Aufnahmekammer (161), dem Druckausgleichsloch (134), der Ausgleichskammer (137), dem Verbindungskanal (141) und der zweiten Aufnahmekammer (162) besteht.

13. Vorrichtung zum Steuern des Wechsels eines Strömungswegs nach einem der Ansprüche 1 - 12, wobei die Anpassvorrichtung (105) eine Anpassstange (151), einen magnetischen Rotor (152), eine Spule (153) und einen Signalleitungsdraht (107) umfasst, die Anpassstange (151) sich in die zweite Aufnahmekammer (162) erstreckt und die Anpassstange (151) um eine bestimmte Verlagerung in der zweiten Aufnahmekammer (162) nach oben oder unten bewegt wird, um eine Strömungsfläche (S2) des Druckausgleichssteuerkreises (104) zu ändern.

## Revendications

1. Dispositif de contrôle de commutation de trajectoire d'écoulement comprenant une entrée de fluide (101), une sortie de fluide (102), un dispositif de vanne (103) agencé entre l'entrée de fluide (101) et la sortie de fluide (102), un circuit de contrôle d'équilibrage de pression (104) et un boîtier (106), où le dispositif de vanne (103) comprend un corps de vanne (131) et un élément de support (132) et est entièrement disposé dans une première chambre de réception (161) du boîtier (106), le corps de vanne (131) peut coulisser dans la première chambre de réception (161) et sépare une chambre d'équilibrage fermée (137) de la première chambre de réception (161),
**caractérisé en ce qu'**un dispositif d'ajustement (105) est réalisé dans une deuxième chambre de réception (162) du boîtier (106), le circuit de contrôle d'équilibrage de pression (104) est formé entre la première chambre de réception (161) et la deuxième chambre de réception (162), et le dispositif d'ajustement (105) est réalisé pour réduire un changement de pression dans le fluide passant à travers le circuit de contrôle d'équilibrage de pression (104) lorsque le dispositif de contrôle de commutation de trajectoire d'écoulement est ouvert/fermé.

2. Dispositif de contrôle de communication de trajectoire d'écoulement selon la revendication 1, où le dispositif d'ajustement (105) réduit le changement de pression dans le fluide dans le circuit de contrôle d'équilibrage de pression (104) en changeant une zone d'écoulement de fluide dans le chemin d'écoulement.

3. Dispositif de contrôle de communication de trajectoire d'écoulement selon la revendication 2, où le dispositif d'ajustement (105) est entraîné par un signal d'impulsion.

4. Dispositif de contrôle de communication de trajectoire d'écoulement selon la revendication 2, où un trou d'équilibrage de pression (134) est réalisé dans le circuit de contrôle d'équilibrage de pression (104).

5. Dispositif de contrôle de communication de trajectoire d'écoulement selon la revendication 4, où le trou d'équilibrage de pression (134) est réalisé dans le corps de vanne (131) et met en communication la première chambre de réception (161) avec une chambre d'admission (111).

6. Dispositif de contrôle de communication de trajectoire d'écoulement selon la revendication 4, où il y a deux ou plusieurs trous d'équilibrage de pression (134).

7. Dispositif de contrôle de communication de trajectoire d'écoulement selon la revendication 4, où le trou d'équilibrage de pression (134) a un diamètre de 0,3 à 1,5 mm.

8. Dispositif de contrôle de communication de trajectoire d'écoulement selon la revendication 7, où le trou d'équilibrage de pression (134) a un diamètre de 0,5 à 1,0 mm.

9. Dispositif de contrôle de communication de trajectoire d'écoulement selon la revendication 4, où un passage de connection (141) mettant en communication une chambre d'équilibrage (137) avec la deuxième chambre de réception (162) est réalisé dans le boîtier (106).

10. Dispositif de contrôle de communication de trajectoire d'écoulement selon l'une quelconque des revendications 1 à 8, où le passage de connection (141) et la deuxième chambre de réception (162) communiquent par un tuyau de connection (108).

11. Dispositif de contrôle de communication de trajectoire d'écoulement selon l'une quelconque des revendications 1 à 10, où une chambre d'admission (111) et une chambre d'évacuation (121) sont formées dans le boîtier (106).

12. Dispositif de contrôle de communication de trajectoire d'écoulement selon la revendication 9, où le circuit de contrôle d'équilibrage de pression (104) est constitué de la première chambre de réception (161), du trou d'équilibrage de pression (134), de la chambre d'équilibrage (137), du passage de connection (141) et de la deuxième chambre de réception (162).

13. Dispositif de contrôle de communication de trajectoire d'écoulement selon l'une quelconque des revendications 1 à 12, où le dispositif d'ajustement (105) comprend une tige d'ajustement (151), un rotor magnétique (152), une bobine (153) et un fil conducteur de signaux (107), la tige d'ajustement (151) s'étend dans la deuxième chambre de réception (162), et la tige d'ajustement (151) est déplacée vers le haut ou vers le bas selon un certain déplacement dans la deuxième chambre de réception (162) de manière à changer une zone d'écoulement (S2) du circuit de contrôle d'équilibrage de pression (104).
